# EUROPEAN PATENT APPLICATION

(11) **EP 4 086 856 A1**
(43) Date of publication of application: **09.11.2022**
(21) Application number: 21194204.0
(22) Date of filing: 01.09.2021
(51) Int. Cl.: G06V 20/00, G06T 5/00, G06V 20/30, H04N 1/00, H04N 5/232

(54) **INFORMATION PROCESSING APPARATUS, INFORMATION PROCESSING METHOD, AND PROGRAM**

(30) Priority: 07.05.2021 JP 2021078993
(71) Applicant: Fujifilm Business Innovation Corp., Tokyo (JP)
(72) Inventor: YOKOHASHI, Mami, Yokohama-shi (JP); IWAFUCHI, Toshihiro, Yokohama-shi (JP)
(74) Representative: Becker, Eberhard

(57) **Abstract**

An information processing apparatus includes a processor configured to: obtain plural images each including any of plural objects; and output report information that is information generated based on an analysis result regarding the plural objects in the plural images, and that is information for reporting according to which of two or more objects, among the plural objects, included in an image the image is to be corrected.

## Description

### Background

### (i) Technical Field

The present disclosure relates to an information processing apparatus, an information processing method, and a program.

### (ii) Related Art

Japanese Unexamined Patent Application Publication No. 2013-69148 describes an information processing apparatus including the following: a belonging probability calculating unit that obtains, for each scene category, a belonging probability which is a probability that an input image belongs to the scene category; an obtaining unit that obtains environment information that is information indicating an environment at the time of image capturing; a correction value calculating unit that calculates a composite correction value by reflecting the environment information in the belonging probability of each scene category; and an image correction unit that corrects the image using the composite correction value.

Japanese Unexamined Patent Application Publication No. 2004-234069 describes an image processing method including the following: identifying a subject present in an image and separating the image into a plurality of separated images; and for each separated image, obtaining a subject pattern that is image-processable by a method determined from a relationship with other images.

A user wants to correct an image to achieve a sense of unity in image quality with a plurality of images, but that image may happen to include two or more objects. In such a case, the user may correct the image according to any of the two or more objects. However, if the user adopts a configuration that corrects the image without outputting according to which of the objects the image is corrected, the user will not be informed of according to which of the objects the image is corrected.

### Summary

It is an object of the present disclosure to inform a user of according to which of two or more objects included in an image the image is corrected in order to achieve a sense of unity in image quality with a plurality of images.

According to a first aspect of the present disclosure, there is provided an information processing apparatus including a processor configured to: obtain a plurality of images each including any of a plurality of objects; and outputting report information that is information generated based on an analysis result regarding the plurality of objects in the plurality of images, and that is information for reporting according to which of two or more objects, among the plurality of objects, included in an image the image is to be corrected.

According to a second aspect of the present disclosure, the processor may be configured to obtain the plurality of images from an original of printed matter including the plurality of images.

According to a third aspect of the present disclosure, the image may be included in the plurality of images obtained from the original.

According to a fourth aspect of the present disclosure, the report information may include an order of the plurality of objects for determining according to which of the two or more objects the image is to be corrected.

According to a fifth aspect of the present disclosure, the order of the plurality of objects may be an order of some of the plurality of objects.

According to a sixth aspect of the present disclosure, the analysis result may indicate importance of each of the plurality of objects in the plurality of images, and the some of the plurality of objects may be, in a case where the analysis result indicates that importance of a specific object among the plurality of objects is less than or equal to a criterion, a portion excluding the specific object.

According to a seventh aspect of the present disclosure, the some of the plurality of objects may be, in a case where there is no image that includes a specific object and another object among the plurality of objects, a portion excluding the specific object.

According to an eighth aspect of the present disclosure, the processor may be configured to change the order of the plurality of objects in accordance with a user operation.

According to a ninth aspect of the present disclosure, the processor may be configured to output impact information that indicates impact of a change in an order of a first object and a second object, among the plurality of objects, included in an image on correction of the image including the first object and the second object.

According to a tenth aspect of the present disclosure, the impact information may include information for comparing a corrected image obtained by correcting the image including the first object and the second object according to the first object, and a corrected image obtained by correcting the image including the first object and the second object according to the second object.

According to an eleventh aspect of the present disclosure, there is provided a program causing a computer to execute a process, the process including: obtaining a plurality of images each including any of a plurality of objects; and outputting report information that is information generated based on an analysis result regarding the plurality of objects in the plurality of images, and that is information for reporting according to which of two or more objects, among the plurality of objects, included in an image the image is to be corrected.

According to a twelfth aspect of the present disclosure, there is provided an information processing method including: obtaining a plurality of images each including any of a plurality of objects; and outputting report information that is information generated based on an analysis result regarding the plurality of objects in the plurality of images, and that is information for reporting according to which of two or more objects, among the plurality of objects, included in an image the image is to be corrected.

According to the first aspect of the present disclosure, a user may be informed of according to which of two or more objects included in an image the image is to be corrected in order to achieve a sense of unity in image quality with a plurality of images.

According to the second aspect of the present disclosure, the user may be informed of according to which of two or more objects included in an image the image is to be corrected in order to achieve a sense of unity in image quality with images in an original.

According to the third aspect of the present disclosure, the user may be informed of according to which of two or more objects in an original that are included in an image the image is to be corrected in order to achieve a sense of unity in image quality within the original.

According to the fourth aspect of the present disclosure, the user may be informed of according to which object the image is to be corrected by using the order of a plurality of objects.

According to the fifth aspect of the present disclosure, the needless output of, in order to inform the user of according to which object the image is to be corrected, the order of all objects may be eliminated.

According to the sixth aspect of the present disclosure, the needless output of, in order to inform the user of according to which object the image is to be corrected, the order of a plurality of objects including an object whose importance is less than or equal to a criterion in a plurality of images may be eliminated.

According to the seventh aspect of the present disclosure, the needless output of, in order to inform the user of according to which object the image is to be corrected, a plurality of objects including an object that is not included in any image with another object may be eliminated.

According to the eighth aspect of the present disclosure, the order of the plurality of objects, which is for determining according to which object the image is to be corrected, may be changed in accordance with a user operation.

According to the ninth aspect of the present disclosure, the user may be informed of the impact of a change in the order of a first object and a second object on correction of an image including the first object and the second object.

According to the tenth aspect of the present disclosure, a corrected image obtained by correcting an image including a first object and a second object before changing the order of the first object and the second object may be compared with a corrected image obtained by correcting the image after changing the order.

According to the eleventh aspect of the present disclosure, a user may be informed of according to which of two or more objects included in an image the image is to be corrected in order to achieve a sense of unity in image quality with a plurality of images.

According to the twelfth aspect of the present disclosure, a user may be informed of according to which of two or more objects included in an image the image is to be corrected in order to achieve a sense of unity in image quality with a plurality of images.

### Brief Description of the Drawings

An exemplary embodiment of the present disclosure will be described in detail based on the following figures, wherein:
Fig. 1 is a diagram illustrating an example of the hardware configuration of an image processing apparatus in an exemplary embodiment of the present disclosure;
Fig. 2 is a block diagram illustrating an example of the functional configuration of the image processing apparatus in the exemplary embodiment of the present disclosure;
Fig. 3A is a flowchart illustrating an example of the operation of the image processing apparatus in the exemplary embodiment of the present disclosure;
Figs. 3B is a flowchart illustrating an example of the operation of the image processing apparatus in the exemplary embodiment of the present disclosure;
Figs. 3C is a flowchart illustrating an example of the operation of the image processing apparatus in the exemplary embodiment of the present disclosure;
Figs. 4A and 4B are diagrams illustrating an example of a correction setting screen displayed before an original obtaining unit obtains an original;
Fig. 5 is a diagram illustrating an example of scene information after a scene determination unit counts up the number of images per scene in a plurality of images;
Fig. 6 is a diagram illustrating a first example of a priority checking screen displayed by a priority changing unit;
Fig. 7 is a diagram illustrating a second example of the priority checking screen displayed by the priority changing unit;
Fig. 8 is a diagram illustrating a third example of the priority checking screen displayed by the priority changing unit;
Fig. 9 is a diagram illustrating a first example of the priority checking screen including a changed priority displayed by the priority changing unit;
Fig. 10A is a diagram illustrating a second example of the priority checking screen including a changed priority displayed by the priority changing unit, and Fig. 10B is a diagram illustrating an example of a change result checking screen displayed by the priority changing unit; and
Fig. 11 is a diagram illustrating an example of correction content information to which a correction content determination unit refers when determining correction content.

### Detailed Description

Hereinafter, an exemplary embodiment of the present disclosure will be described in detail with reference to the accompanying drawings.

### Overview of Exemplary Embodiment

The present exemplary embodiment provides an information processing apparatus that obtains a plurality of images each including any of a plurality of objects, and that outputs report information that is information generated based on an analysis result regarding the plurality of objects in the plurality of images, and that is information for reporting according to which of two or more objects, among the plurality of objects, included in an image the image is corrected.

Here, although the information processing apparatus may be one that obtains a plurality of images from data in any unit, such as the original or pages of printed matter that includes a plurality of images, the following description assumes that the information processing apparatus is one that obtains a plurality of images from an original of printed matter that includes a plurality of images.

In that case, it is considered that an image that is a target for determining according to which of the two or more objects the image is corrected may be included or not included in the plurality of images obtained from the original. The former is the case where images in the original are corrected to achieve a sense of unity in the original, and the latter is the case where images outside the original are corrected according to the sense of unity in the original. Although the information processing apparatus may perform either of the two types of correction, the following description assumes that the information processing apparatus performs the former type of correction.

In addition, the report information may be one that includes the order of two or more objects included in an image for determining, before correcting the image, according to which of the two or more objects the image is corrected. Alternatively, the report information may be one that includes the order of a plurality of objects for determining, before correcting a plurality of images each including any of the plurality of objects, according to which of two or more objects included in each image the image is corrected. Hereinafter, the case where the report information is the latter will be described by way of example.

In that case, at first, the order of the plurality of objects may be the order of all the objects or the order of some of the objects. The former is the case where the report information includes the order of the plurality of objects without omitting some of the objects, and the latter is the case where the report information includes the order of the plurality of objects with some omissions.

On this occasion, some of the objects may be determined by any method; however, the following description describes an exemplary case where some of the objects are determined by the following two methods.

A first method is a method in the case where the analysis result indicates the importance of each of the plurality of objects in the plurality of images. This method is such that, in the case where the analysis result indicates that the importance of a specific object among the plurality of objects is less than or equal to a criterion, a portion excluding the specific object serves as some of the plurality of objects.

A second method is a method that, in the case where there is no image that includes a specific object and another object among the plurality of objects, a portion excluding the specific object serves as some of the plurality of objects.

In that case, next, the information processing apparatus may change the order of the plurality of objects in accordance with a user operation. Although it is not always necessary for the information processing apparatus to change the order of the plurality of objects, the following description assumes that the information processing apparatus changes the order of the plurality of objects.

In addition, the information processing apparatus may be one that outputs impact information indicating the impact of a change in the order of a first object and a second object among the plurality of objects on correction of an image including the first object and the second object. Although it is not always necessary for the information processing apparatus to output the impact information, the following description assumes that the information processing apparatus outputs the impact information.

The impact information may be any information that indicates such an impact. Hereinafter, as the impact information, one that includes information for comparing a corrected image obtained by correcting the image including the first object and the second object according to the first object, and a corrected image obtained by correcting the image including the first object and the second object according to the second object will be described by way of example.

Hereinafter, the information processing apparatus will be described as an image processing apparatus by way of example. Here, the image processing apparatus may be a personal computer (PC) where image processing software is installed, and may be connected to a printer that prints an image-processed image.

### Hardware Configuration of Image Processing Apparatus

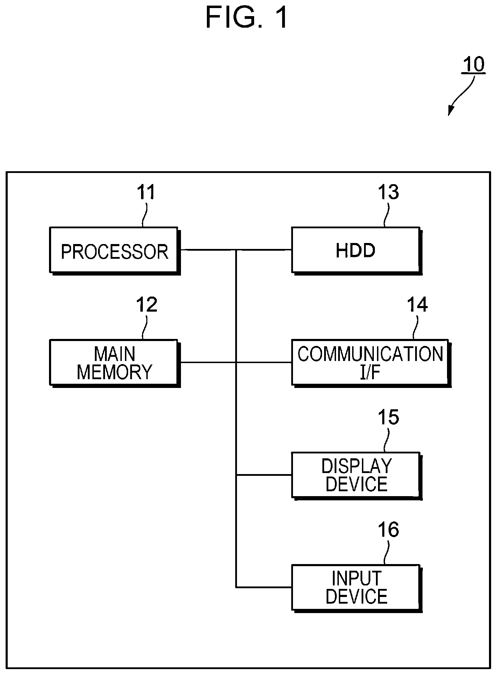

Fig. 1 is a diagram illustrating an example of the hardware configuration of an image processing apparatus 10 in the present exemplary embodiment. As illustrated in Fig. 1, the image processing apparatus 10 includes a processor 11, a main memory 12, and a hard disk drive (HDD) 13. Here, the processor 11 realizes functions described later by executing various types of software such as the operating system (OS) and applications. In addition, the main memory 12 is a storage area for storing various types of software and data used in executing the software, and the HDD 13 is a storage area for storing input data for various types of software and output data from various types of software. Furthermore, the image processing apparatus 10 includes a communication interface (I/F) 14, which is for communicating with the outside, a display device 15, such as a display, and an input device 16, such as a keyboard and a mouse. Functional Configuration of Image Processing Apparatus

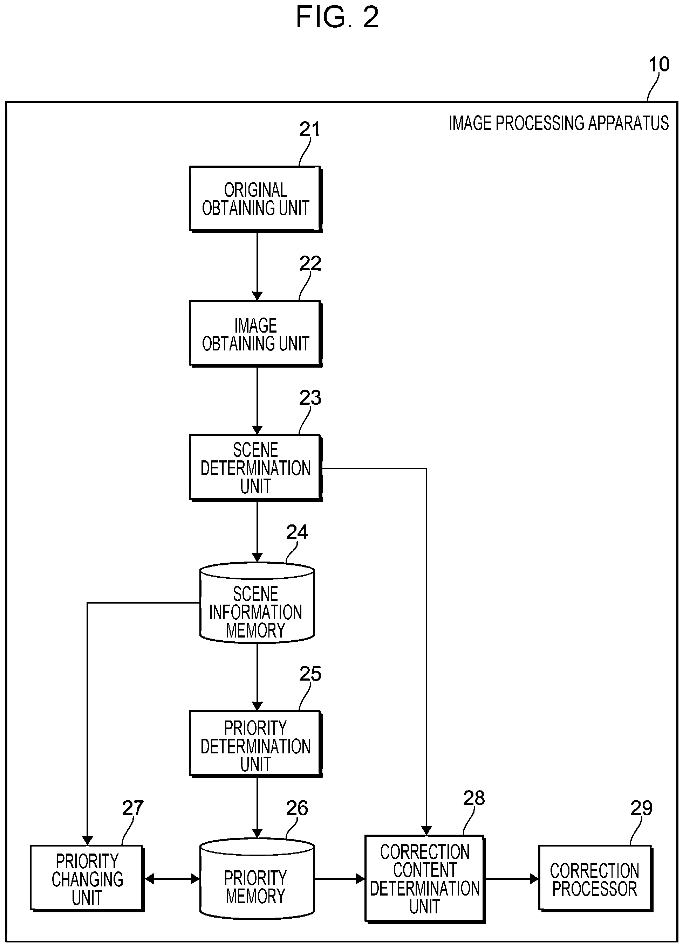

Fig. 2 is a block diagram illustrating an example of the functional configuration of the image processing apparatus 10 in the present exemplary embodiment. As illustrated in Fig. 2, the image processing apparatus 10 includes an original obtaining unit 21, an image obtaining unit 22, a scene determination unit 23, a scene information memory 24, a priority determination unit 25, a priority memory 26, a priority changing unit 27, a correction content determination unit 28, and a correction processor 29.

The original obtaining unit 21 obtains an original of printed matter that includes a plurality of images. Here, the printed matter is one that is printed by a printer on a recording medium such as paper and that is used for a specific application. Examples of the printed matter include photobooks and food commodities. The original is data output to a printer for generating the printed matter. Examples of the original include data, generated by software, of photobooks and food commodities.

The image obtaining unit 22 obtains a plurality of images from the original obtained by the original obtaining unit 21. Here, it is preferable that the plurality of images be all the images included in the original; however, if all the images are too numerous, some of the images included in the original may be obtained. In addition, each of the plurality of images includes any of a plurality of scenes prepared in advance. Here, the scenes are objects included in images. For example, if an image is a photograph, a scene is a subject, i.e., an image-capturing target, included in the image. The scenes include, for example, landscapes, people, animals, and dishes. As the scenes, it is preferable that scenes that may be discriminated by image discrimination technology based on artificial intelligence (AI) be prepared in advance. In the present exemplary embodiment, processing of the image obtaining unit 22 is performed as an example of obtaining a plurality of images each including any of a plurality of objects.

The scene determination unit 23 determines one or more scenes included in each of the plurality of images obtained by the image obtaining unit 22, thereby generating scene information regarding scenes in the original. The scene determination unit 23 may determine one or more scenes using, for example, image discrimination technology based on AI. For each scene, the scene determination unit 23 counts the number of images including that scene, and, for each scene, generates information on the number of images including that scene as scene information.

Here, it is not always necessary that a scene determined by image discrimination technology based on AI and a scene managed by scene information have a one-to-one correspondence. To improve the accuracy of learning in AI, many subdivided labels may be prepared as labels representing each scene. However, if labels are displayed as they are, there will be numerous items and the user has difficulty in selecting scenes. Therefore, scenes discriminated by AI are organized into groups of scenes to be displayed to the user. For example, it is conceivable to organize mammals and reptiles into animals, dishes and ingredients into food, trees and flowers into plants, glasses and metals into industrial products, and so forth.

In addition, the scene determination unit 23 may separately count the number of images including only a certain scene and the number of images including that scene and another scene. Alternatively, the scene determination unit 23 may separately count the number of images at least including only a certain scene and the number of images including that scene and another scene. Hereinafter, the former counting method will be described by way of example. However, regardless of which counting method is adopted, the number of images per scene refers to the number of images including at least that scene. In addition, the scene determination unit 23 associates, for a scene combining a certain scene and another scene, not only the number of images but also the images themselves.

Every time the scene determination unit 23 determines one or more scenes included in an image obtained by the image obtaining unit 22, the scene determination unit 23 passes that image to the correction content determination unit 28.

The scene information memory 24 stores the scene information generated by the scene determination unit 23. In the present exemplary embodiment, the scene information is used as an example of an analysis result regarding the plurality of objects in the plurality of images. In the present exemplary embodiment, the scene information is also used as an example of an analysis result indicating the importance of each of the plurality of objects in the plurality of images.

The priority determination unit 25 determines, on the basis of the scene information stored in the scene information memory 24, the priority of scenes for determining according to which of two or more scenes included in an image the image is corrected. For example, the priority determination unit 25 determines the priority so that the priority of a scene included in many images in the original will be high. In addition, the priority determination unit 25 determines the priority so that, if there are two or more scenes included in the same number of images in the original, the priority of a scene whose priority in predetermined priority of recommendation is higher will be higher. Here, as the predetermined priority of recommendation, the order of people, landscapes, animals, food, plants, and industrial products is given as an example. This is the ascending order of the degree of impact, which is obtained by taking into consideration the degree of impact of correction.

The priority memory 26 stores the priority determined by the priority determination unit 25.

The priority changing unit 27 generates a priority checking screen including the priority stored in the priority memory 26 as it is, and outputs the priority checking screen to the display device 15. In the present exemplary embodiment, the priority checking screen is used as an example of report information that is information generated based on an analysis result and that is information for reporting according to which of two or more objects, among the plurality of objects, included in an image the image is corrected. In addition, in the present exemplary embodiment, the priority checking screen is also used as an example of report information that includes an order of the plurality of objects for determining according to which of the two or more objects the image is corrected. Furthermore, in the present exemplary embodiment, this processing of the priority changing unit 27 is performed as an example of outputting the report information.

In addition, the priority changing unit 27 may generate a priority checking screen that includes the priority stored in the priority memory 26 that is in a narrowed-down state, and output the priority checking screen to the display device 15. As this priority checking screen, there is one that includes the priority of scenes after excluding scenes that are included in only a few images, and one that includes the priority of scenes after excluding scenes that are not included with another scene in an image. In the former case, if the number of images for a certain scene is less than or equal to a criterion on the basis of the scene information stored in the scene information memory 24, the priority changing unit 27 simply excludes that scene. In the latter case, if the number of images for a scene combining a certain scene and another scene is 0 on the basis of the scene information stored in the scene information memory 24, the priority changing unit 27 simply excludes that scene. In the present exemplary embodiment, this priority checking screen is used as an example of report information that includes the order of the plurality of objects which is the order of some of the plurality of objects. In addition, in the present exemplary embodiment, this priority checking screen is also used as an example of report information that includes the order of the plurality of objects which is the order of a portion excluding, in the case where the analysis result indicates that the importance of a specific object among the plurality of objects is less than or equal to a criterion, the specific object. Furthermore, in the present exemplary embodiment, this priority checking screen is also used as an example of report information that includes the order of the plurality of objects which is the order of a portion excluding, in the case where there is no image that includes a specific object and another object among the plurality of objects, the specific object.

Furthermore, the priority changing unit 27 changes the priority stored in the priority memory 26 in response to a user operation on the priority checking screen displayed on the display device 15. In addition, the priority changing unit 27 may generate, before changing the priority, a change result checking screen that indicates the impact of changing the priority on correction of the image, and output the change result checking screen to the display device 15. On that occasion, the priority changing unit 27 may extract, on the basis of the scene information stored in the scene information memory 24, an image associated with a scene whose priority has been changed and a scene combined with another scene as an image affected by changing the priority. The priority changing unit 27 may generate information for comparing a corrected image before changing the priority of the image and a corrected image after changing the priority of the image, and output this information as part of the change result checking screen to the display device 15. In the present exemplary embodiment, this processing of the priority changing unit 27 is performed as an example of changing the order of the plurality of objects in accordance with a user operation. In addition, in the present exemplary embodiment, the change result checking screen is used as an example of impact information indicating the impact of a change in the order of a first object and a second object among the plurality of objects on correction of an image including the first object and the second object. Furthermore, in the present exemplary embodiment, the change result checking screen is also used as an example of impact information including information for comparing a corrected image obtained by correcting an image including the first object and the second object according to the first object, and a corrected image obtained by correcting an image including the first object and the second object according to the second object. Furthermore, in the present exemplary embodiment, this processing of the priority changing unit 27 is performed as an example of outputting the impact information.

The correction content determination unit 28 determines, on the basis of the priority stored in the priority memory 26, according to which of two or more scenes included in an image, passed from the scene determination unit 23, the image is corrected. The correction content determination unit 28 determines the correction content of correction according to the scene on the basis of the association between predetermined scenes and correction content.

When the image and the correction content are passed from the correction content determination unit 28, the correction processor 29 performs correction processing of the passed image with the passed correction content.

Note that it is not always necessary for the image processing apparatus 10 to include all of the original obtaining unit 21, the image obtaining unit 22, the scene determination unit 23, the scene information memory 24, the correction content determination unit 28, and the correction processor 29. For example, the image processing apparatus 10 need not include the original obtaining unit 21. In that case, in the image processing apparatus 10, the image obtaining unit 22 may obtain a plurality of images before these images are included in an original. Alternatively, the image processing apparatus 10 need not include the correction processor 29. In that case, the image processing apparatus 10 may convey the correction content determined by the correction content determination unit 28 to another apparatus, and this other apparatus may correct a to-be-corrected image with the conveyed correction content. Operation of Image Processing Apparatus

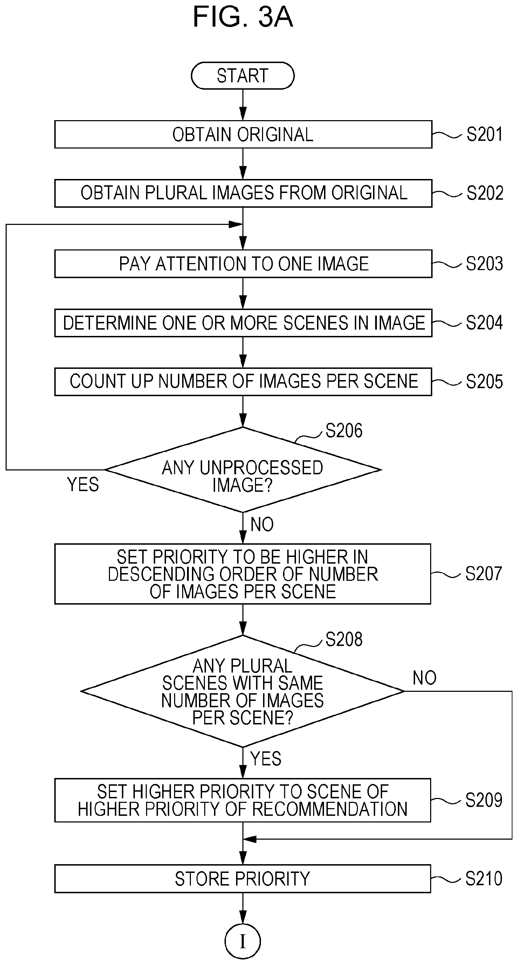

Figs. 3A to 3C are flowcharts illustrating an example of the operation of the image processing apparatus 10 in the present exemplary embodiment. Note that it is assumed below that one image includes two scenes at most for the sake of simplicity of the description.

As illustrated in Fig. 3A, in the image processing apparatus 10, the original obtaining unit 21 first obtains an original (step S201).

Next, the image obtaining unit 22 obtains a plurality of images from the original obtained in step S201 (step S202).

Next, the scene determination unit 23 pays attention to one of the plurality of images obtained in step S202 (step S203). The scene determination unit 23 determines one or more scenes in the image to which attention has been paid in step S203 (step S204). Accordingly, the scene determination unit 23 counts up the number of images per scene on the basis of the scene information stored in the scene information memory 24 (step S205). After that, the scene determination unit 23 determines whether there is any unprocessed image in the images obtained in step S202 (step S206). If it is determined that there is an unprocessed image, the scene determination unit 23 returns the process back to step S203; if it is determined that there is no unprocessed image, the scene determination unit 23 advances the process to step S207.

Next, the priority determination unit 25 determines the priority of the scenes by referring to the scene information stored in the scene information memory 24. Specifically, the priority determination unit 25 determines the priority so that the priority becomes higher in descending order of the number of images per scene (step S207). The priority determination unit 25 determines whether there are plural scenes with the same number of images per scene on the basis of the scene information stored in the scene information memory 24 (step S208). If it is determined that there are plural scenes with the same number of images per scene, the priority determination unit 25 determines the priority so that the priority of a scene whose priority in predetermined priority of recommendation is higher will be higher (step S209). If it is determined that there are no plural scenes with the same number of images per scene, the priority determination unit 25 advances the process as it is to step S210. Then, the priority determination unit 25 stores the priority determined as above in the priority memory 26 (step S210).

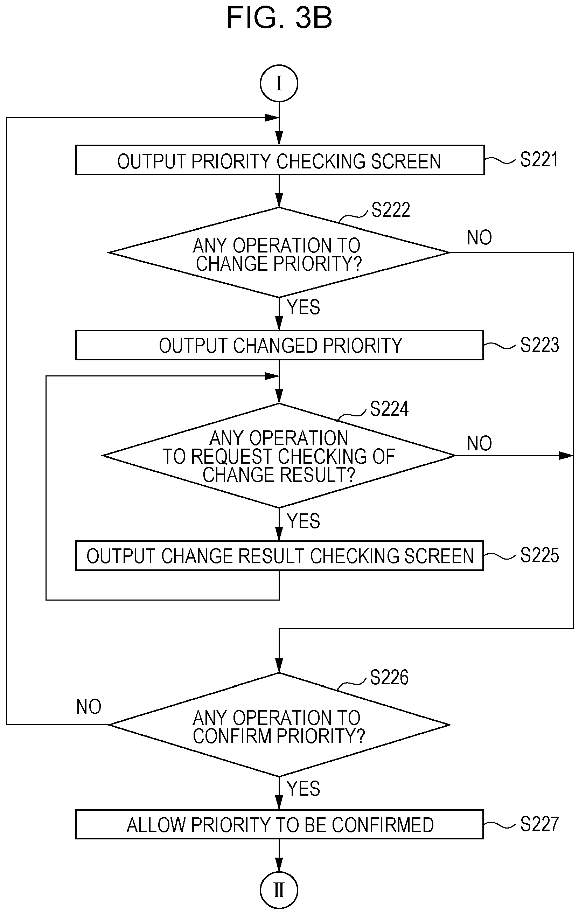

Next, as illustrated in Figs. 3B, the priority changing unit 27 outputs a priority checking screen including the priority stored in the priority memory 26 to the display device 15 (step S221).

Accordingly, the user may perform an operation to change the priority on the priority checking screen. Then, the priority changing unit 27 determines if there has been any operation performed by the user to change the priority (step S222). If it is determined that there has been no operation performed by the user to change the priority, the priority changing unit 27 advances the process to step S226. If it is determined that there has been an operation performed by the user to change the priority, the priority changing unit 27 outputs the changed priority to the display device 15 so that the changed priority will be displayed on the priority checking screen (step S223).

Accordingly, the user may check the result of changing the priority, that is, how correction of the image will be affected by changing the priority. Then, the priority changing unit 27 determines if there has been any operation performed by the user to request checking of the change result (step S224). If it is determined that there has been no operation performed by the user to request checking of the change result, the priority changing unit 27 advances the process to step S226. If it is determined that there has been an operation performed by the user to request checking of the change result, the priority changing unit 27 outputs a change result checking screen for allowing the user to check the result of changing the priority to the display device 15 (step S225). Then, the priority changing unit 27 returns the process back to step S224. For example, the priority changing unit 27 may return the process back to step S224 in the case where an approval entry is performed on the change result checking screen or a predetermined time has elapsed since the change result checking screen was displayed.

After that, the priority changing unit 27 determines if an operation has been performed by the user to confirm the priority (step S226). If it is determined that no operation has been performed by the user to confirm the priority, the priority changing unit 27 returns the process back to step S221. If it is determined that an operation has been performed by the user to confirm the priority, the priority changing unit 27 confirms the priority (step S227). Specifically, if step S227 is executed since there has been no operation performed by the user to change the priority in step S222, the priority changing unit 27 allows the priority stored in the priority memory 26 to be confirmed as it is. Alternatively, if step S227 is executed since there has been no operation performed by the user to request checking of the change result in step S224, the priority changing unit 27 overwrites the priority stored in the priority memory 26 with the priority changed by the user and allows the changed priority to be confirmed.

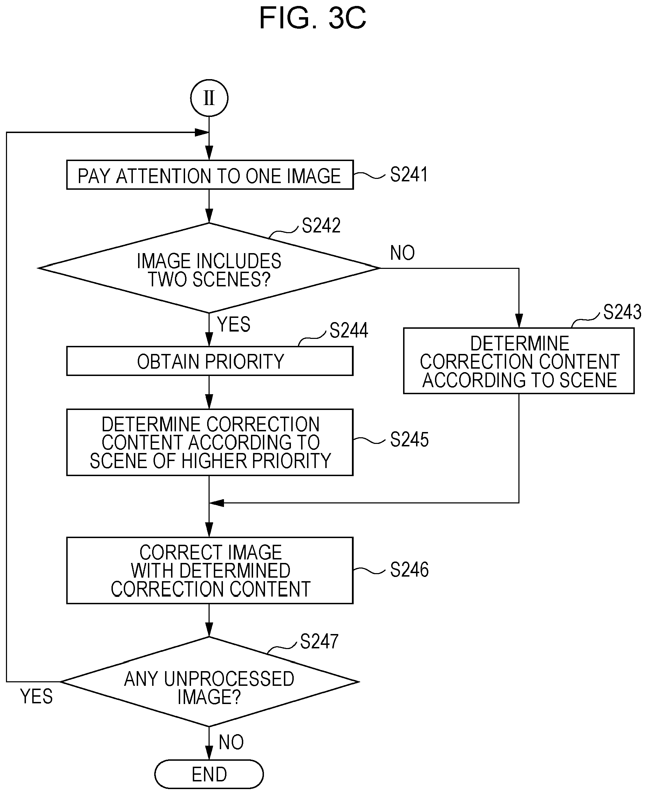

Next, as illustrated in Figs. 3C, the correction content determination unit 28 pays attention to one of the plurality of images used in scene determination in step S204 (step S241). The correction content determination unit 28 determines whether the image to which attention has been paid in step S241 includes two scenes (step S242). If it is determined in step S242 that the image does not include two scenes, the correction content determination unit 28 determines correction content according to one scene included in the image (step S243).

If it is determined in step S242 that the image includes two scenes, the correction content determination unit 28 obtains the priority stored in the priority memory 26 (step S244). By referring to the priority obtained in step S244, the correction content determination unit 28 determines correction content according to a scene of higher priority out of the two scenes (step S245).

Next, the correction processor 29 corrects the image to which attention has been paid in step S241 with the correction content determined in step S243 or step S245 (step S246). After that, the correction processor 29 determines whether there is any unprocessed image in the images used in scene determination in step S204 (step S247). If it is determined that there is an unprocessed image, the correction processor 29 returns the process back to step S241; if it is determined that there is no unprocessed image, the correction processor 29 ends the process.

### Specific Example of Operation of Image Processing Apparatus

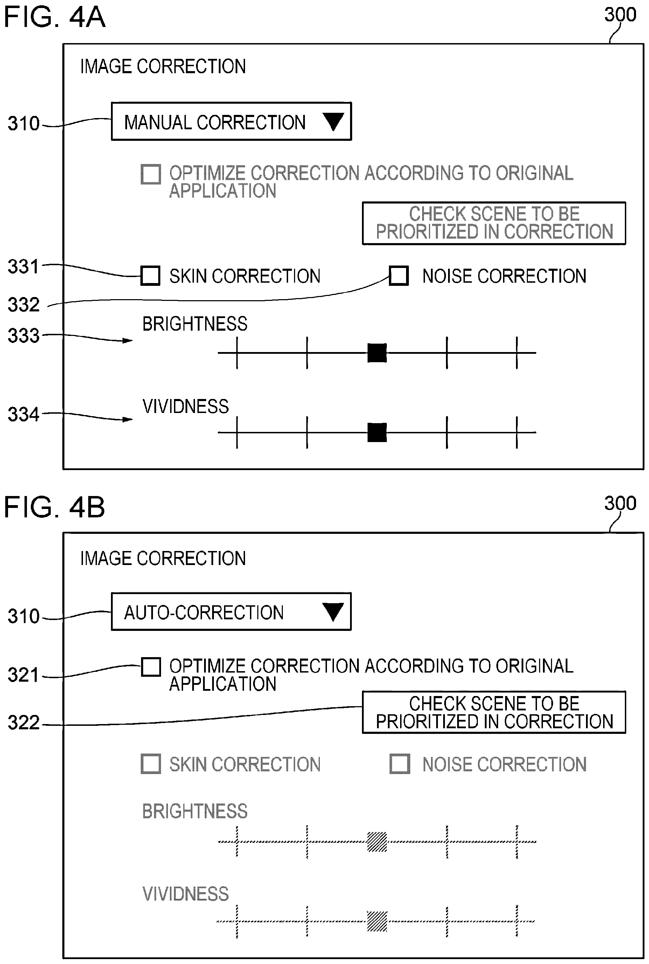

Figs. 4A and 4B are diagrams illustrating an example of a correction setting screen 300 displayed on the display device 15 before the original obtaining unit 21 obtains an original in step S201 in Fig. 3A. As illustrated in Figs. 4A and 4B, the correction setting screen 300 includes a pull-down list 310. With the pull-down list 310, which of auto-correction and manual correction is used to correct an image is selected.

Fig. 4A illustrates the state of the correction setting screen 300 in the case where manual correction has been selected with the pull-down list 310. In this case, check boxes 331 and 332 and slider bars 333 and 334 are displayed active, and other items are displayed inactive. With the check boxes 331 and 332, commands for performing skin correction and noise correction are respectively given. With the slider bars 333 and 334, the degree of brightness and the degree of vividness are respectively specified.

Fig. 4B illustrates the state of the correction setting screen 300 in the case where auto-correction has been selected with the pull-down list 310. In this case, the check box 321 is displayed active, and other items are displayed inactive. With the check box 321, a command for optimizing the correction according to the original application is given. When such a command is given with the check box 321, a button 322 is also displayed active. The button 322 is a button for checking according to which of two or more scenes included in an image the image is corrected. In response to pressing of the button 322, the operation of the present exemplary embodiment is performed.

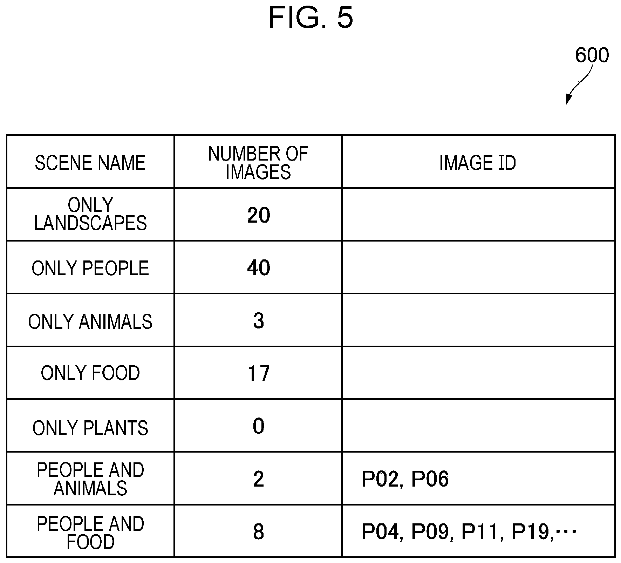

Fig. 5 is a diagram illustrating an example of scene information 600 after the scene determination unit 23 counts up the number of images per scene in the plurality of images in step S205 in Fig. 3A. As illustrated in Fig. 5, the scene information 600 associates the scene name, the number of images, and the image identification (ID).

The scene name is the name of a scene. The scene name incudes the scene name of only one scene, and the scene name of a combination of two scenes.

The number of images is the number of images including a corresponding scene. Fig. 5 indicates that, among the images obtained in step S202 in Fig. 3A, there are twenty images that only include landscapes, forty images that only include people, three images that only include animals, seventeen images that only include food, and zero images that only include plants. Fig. 5 also indicates that, among the images obtained in step S202 in Fig. 3A, there are two images that include people and animals, and eight images that include people and food.

The image ID is the identification information of an image including a corresponding scene. Fig. 5 indicates that, among the images obtained in step S202 in Fig. 3A, an image with the image ID "P02" and so forth include people and animals, and an image with the image ID "P04" and so forth include people and food.

Although it is assumed that the scene name includes the scene name of only one scene and the scene name of a combination of two scenes, the scene name may include the scene name at least including one scene, and the scene name of a combination of two scenes. In this case, if one image includes a plurality of scenes, each of the scenes is counted as one image. For example, if a certain image includes people and dishes, the image is counted as one image including people and also as one image including dishes.

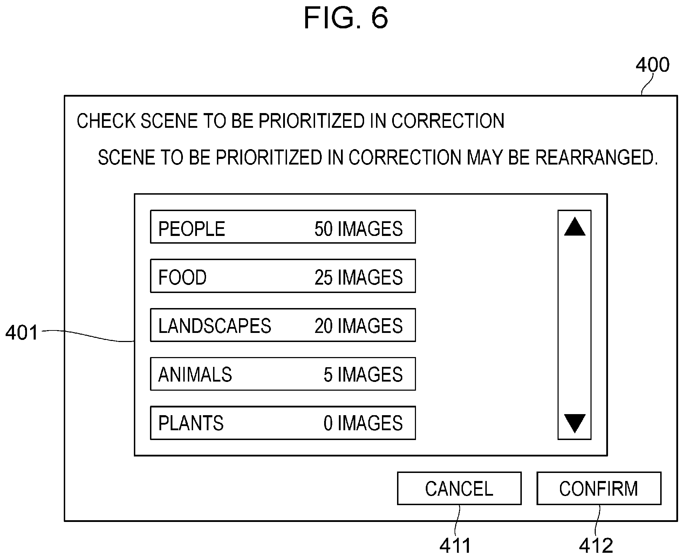

Fig. 6 is a diagram illustrating an example of a priority checking screen 400 displayed on the display device 15 by the priority changing unit 27 in step S221 in Figs. 3B. As illustrated in Fig. 6, the priority checking screen 400 includes a priority display field 401, a cancellation button 411, and a confirmation button 412.

It is displayed in the priority display field 401 that people, food, landscapes, animals, and plants are prioritized in this order. In addition, as information for allowing the user to recognize the degree of impact of each scene, the number of images including that scene is also displayed in the priority display field 401. Since the number of images that only include people is forty, the number of images that include people and animals is two, and the number of images that include people and food is eight in Fig. 5, here, fifty, which is the total number of these images, is displayed as the number of images including people. Since the number of images that only include animals is three and the number of images that include people and animals is two in Fig. 5, here, five, which is the total number of these images, is displayed as the number of images including animals. Since the number of images that only include food is seventeen and the number of images that include people and food is eight in Fig. 5, here, twenty five, which is the total number of these images, is displayed as the number of images including food. Note that the number of images is merely an example of information for allowing the user to recognize the degree of impact of each scene; alternatively, the proportion of the number of images including each scene to the total number of images may be displayed.

The cancellation button 411 is a button that is pressed when aborting this process, and the confirmation button 412 is a button that is pressed when confirming the priority displayed at that time in the priority display field 401. In addition, the priority checking screen 400 is not provided with a button for checking the result of changing the priority. Therefore, the priority checking screen 400 is a screen displayed in the case where, after step S223 in Figs. 3B is executed, step S226 is executed without executing step S224 or S225.

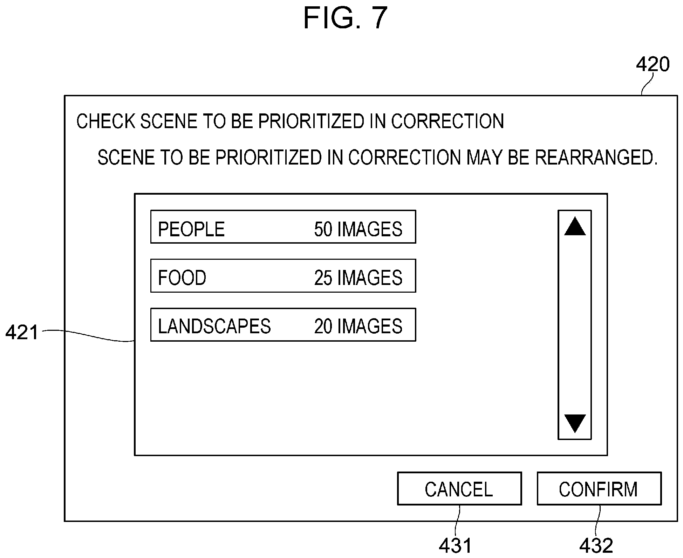

Fig. 7 is a diagram illustrating an example of a priority checking screen 420 displayed on the display device 15 by the priority changing unit 27 in step S221 in Figs. 3B. The priority checking screen 420 is based on the idea that, as a result of scene determination, scenes with a small proportion of the number of images need not be displayed, or some scenes with larger numbers of images may be displayed. As illustrated in Fig. 7, the priority checking screen 420 includes a priority display field 421, a cancellation button 431, and a confirmation button 432.

Only people, food, and landscapes are displayed in the priority display field 421. In contrast, neither animals nor plants are displayed since images including them are both less than or equal to 5% of the total. The cancellation button 431 and the confirmation button 432 are the same as the cancellation button 411 and the confirmation button 412 in Fig. 6. In addition, the priority checking screen 420 is also a screen displayed in the case where, after step S223 in Figs. 3B is executed, step S226 is executed without executing step S224 or S225.

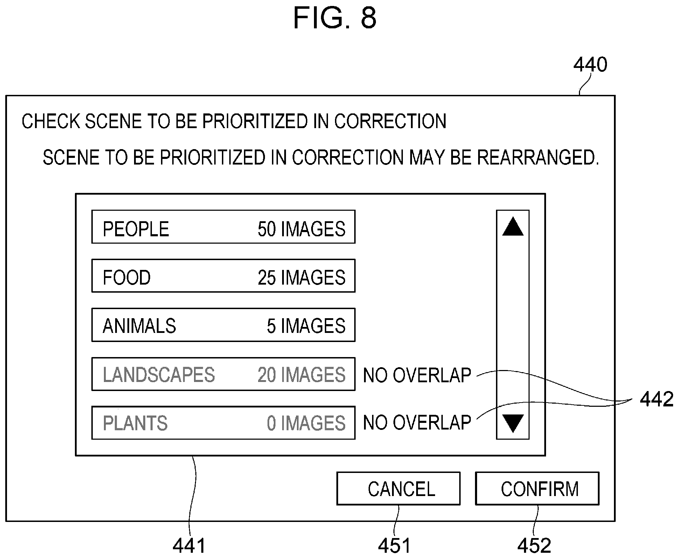

Fig. 8 is a diagram illustrating an example of a priority checking screen 440 displayed on the display device 15 by the priority changing unit 27 in step S221 in Figs. 3B. The priority checking screen 440 is based on the idea that, when there is a scene that does not overlap any other scene in one image, even if the priority of that scene is changed, this does not affect correction of the image; thus, this scene need not be included in candidates whose priority is to be changed. As illustrated in Fig. 8, the priority checking screen 440 includes a priority display field 441, a cancellation button 451, and a confirmation button 452.

In the priority display field 441, only people, food, and animals that overlap any other scene in one image are displayed. In contrast, because landscapes and plants do not overlap any other scene in one image and, even if their priority is changed, this does not affect correction; thus, neither landscapes nor plants are displayed. In Fig. 8, text 442 is also displayed in order to make this more explicitly. The cancellation button 451 and the confirmation button 452 are the same as the cancellation button 411 and the confirmation button 412 in Fig. 6. In addition, the priority checking screen 440 is also a screen displayed in the case where, after step S223 in Figs. 3B is executed, step S226 is executed without executing step S224 or S225.

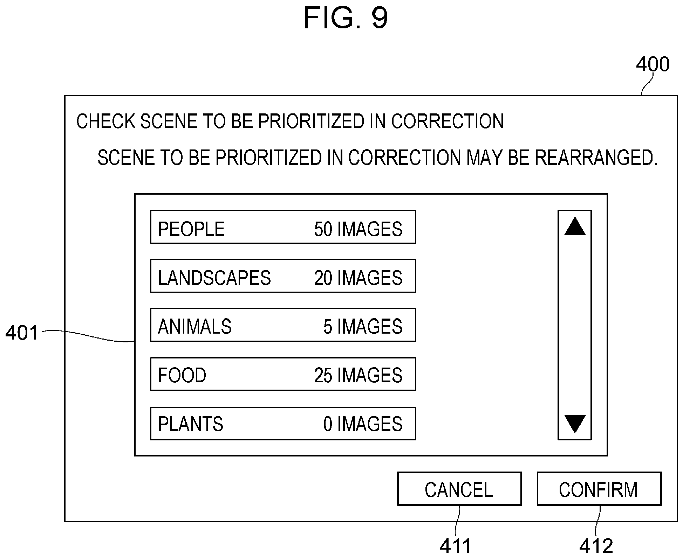

Fig. 9 is a diagram illustrating an example of the priority checking screen 400, including the changed priority, displayed on the display device 15 by the priority changing unit 27 in step S223 in Figs. 3B. In this manner, the user may rearrange the scene names to replace scenes to be prioritized in correction. Although it is displayed in the priority display field 401 in Fig. 6 that people, food, landscapes, animals, and plants are prioritized in this order, it is displayed in the priority display field 401 in Fig. 9 that people, landscapes, animals, food, and plants are prioritized in this order.

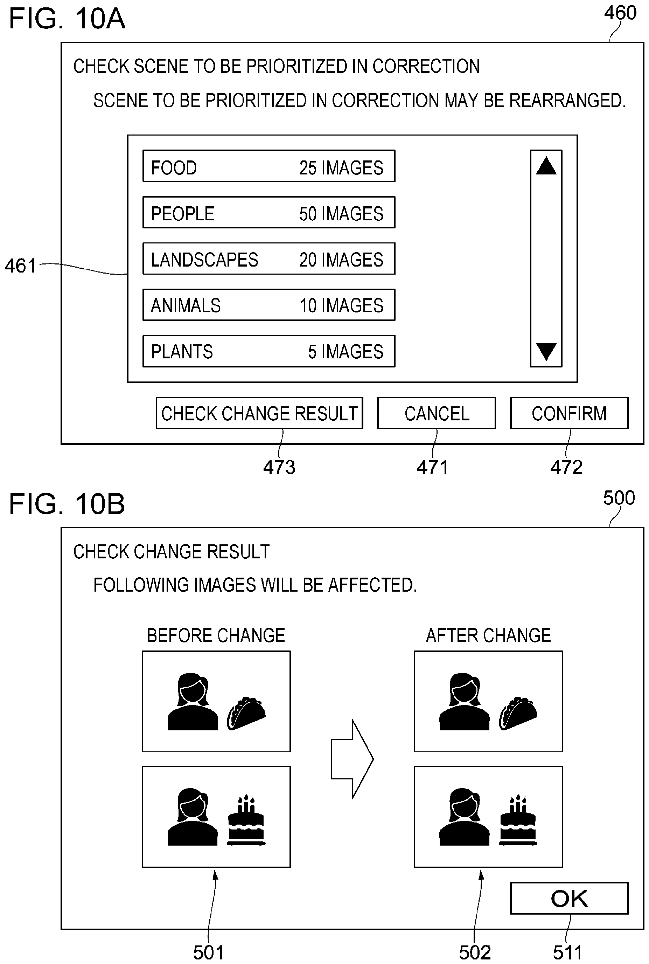

Fig. 10A is a diagram illustrating an example of a priority checking screen 460, including a changed priority, displayed on the display device 15 by the priority changing unit 27 in step S223 in Figs. 3B. As illustrated in Fig. 10A, the priority checking screen 460 includes a priority display field 461, a cancellation button 471, a confirmation button 472, and a change result checking button 473. Here, the priority of food is set to be higher than the priority of people in the priority display field 461.

Fig. 10B is a diagram illustrating an example of a change result checking screen 500 displayed on the display device 15 by the priority changing unit 27 in step S225 in Figs. 3B. This change result checking screen 500 is displayed in the case where the change result checking button 473 is pressed on the priority checking screen 460 in Fig. 10A. The change result checking screen 500 is a screen for displaying one or more images that may be affected when the priority is changed, and allowing the user to check the correction content. As illustrated in Fig. 10B, the change result checking screen 500 includes before-the-change images 501, after-the-change images 502, and an OK button 511. Here, because the priority of food is set to be higher than the priority of people, correction of images including people and food is affected. To this end, images including people and food are displayed as the before-the-change images 501 and the after-the-change images 502. On that occasion, corrected images before changing the priority are displayed as the before-the-change images 501, and corrected images after changing the priority are displayed as the after-the-change images 502.

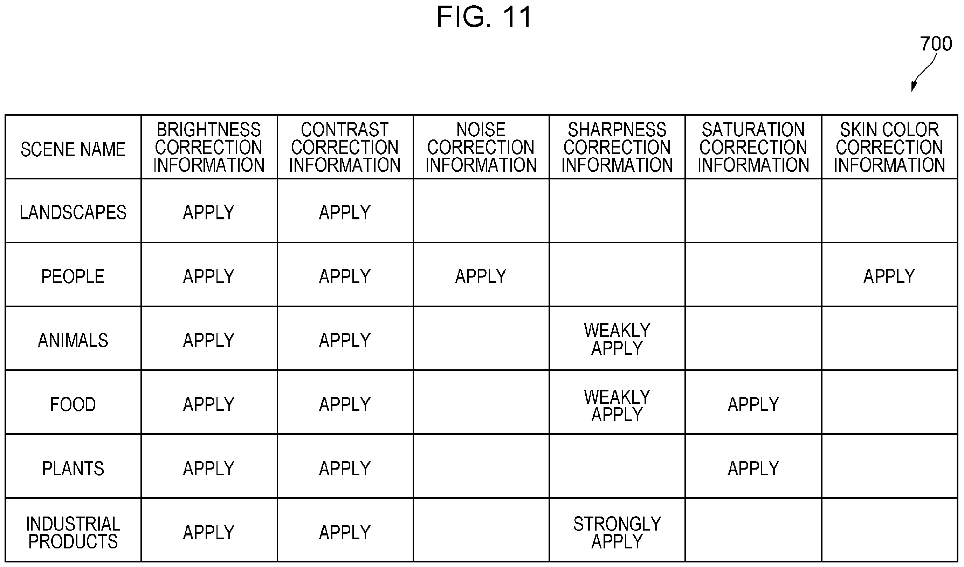

Fig. 11 is a diagram illustrating an example of correction content information 700 to which the correction content determination unit 28 refers when determining correction content in step S243 or S245 in Figs. 3C.

As illustrated in Fig. 11, the correction content information 700 associates the scene name, brightness correction information, contrast correction information, noise correction information, sharpness correction information, saturation correction information, and skin-color correction information. The scene name is the name of a scene. The brightness correction information, contrast correction information, noise correction information, saturation correction information, and skin-color correction information are items of information that define whether to perform corresponding correction in the case where an image includes a corresponding scene. In addition, the sharpness correction information is information that defines how much sharpness is corrected in the case where an image includes a corresponding scene.

For example, the case of correcting an image including people and food will be considered. To correct the image according to people, brightness correction, contrast correction, noise correction, and skin-color correction are performed. In contrast, to correct the image according to food, brightness correction, contrast correction, and saturation correction are performed, and sharpness correction is weakly performed. Note that the combination of types of correction for each scene illustrated in Fig. 11 is only exemplary.

### Processor

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### Program

Processing performed by the image processing apparatus 10 in the present exemplary embodiment is prepared as a program such as application software.

That is, a program realizing the present exemplary embodiment is regarded as a program causing a computer to realize the following functions: obtaining a plurality of images each including any of a plurality of objects, and outputting report information that is information generated based on an analysis result regarding the plurality of objects in the plurality of images, and that is information for reporting according to which of two or more objects, among the plurality of objects, included in an image the image is corrected.

Needless to say, the program realizing the present exemplary embodiment may be provided by a communication unit or by being stored in a recording medium such as compact-disc read-only memory (CD-ROM) or the like.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
obtain a plurality of images each including any of a plurality of objects; and
output report information that is information generated based on an analysis result regarding the plurality of objects in the plurality of images, and that is information for reporting according to which of two or more objects, among the plurality of objects, included in an image the image is to be corrected.

2. The information processing apparatus according to Claim 1, wherein the processor is configured to obtain the plurality of images from an original of printed matter including the plurality of images.

3. The information processing apparatus according to Claim 2, wherein the image is included in the plurality of images obtained from the original.

4. The information processing apparatus according to Claim 1, wherein the report information includes an order of the plurality of objects for determining according to which of the two or more objects the image is to be corrected.

5. The information processing apparatus according to Claim 4, wherein the order of the plurality of objects is an order of some of the plurality of objects.

6. The information processing apparatus according to Claim 5, wherein:
the analysis result indicates importance of each of the plurality of objects in the plurality of images; and
the some of the plurality of objects are, in a case where the analysis result indicates that importance of a specific object among the plurality of objects is less than or equal to a criterion, a portion excluding the specific object.

7. The information processing apparatus according to Claim 5, wherein the some of the plurality of objects are, in a case where there is no image that includes a specific object and another object among the plurality of objects, a portion excluding the specific object.

8. The information processing apparatus according to Claim 4, wherein the processor is configured to change the order of the plurality of objects in accordance with a user operation.

9. The information processing apparatus according to Claim 8, wherein the processor is configured to output impact information that indicates impact of a change in an order of a first object and a second object, among the plurality of objects, included in an image on correction of the image including the first object and the second object.

10. The information processing apparatus according to Claim 9, wherein the impact information includes information for comparing a corrected image obtained by correcting the image including the first object and the second object according to the first object, and a corrected image obtained by correcting the image including the first object and the second object according to the second object.

11. A program causing a computer to execute a process, the process comprising:
obtaining a plurality of images each including any of a plurality of objects; and
outputting report information that is information generated based on an analysis result regarding the plurality of objects in the plurality of images, and that is information for reporting according to which of two or more objects, among the plurality of objects, included in an image the image is to be corrected.

12. An information processing method comprising:
obtaining a plurality of images each including any of a plurality of objects; and
outputting report information that is information generated based on an analysis result regarding the plurality of objects in the plurality of images, and that is information for reporting according to which of two or more objects, among the plurality of objects, included in an image the image is to be corrected.
